# EUROPEAN PATENT SPECIFICATION

(11) **EP 3 306 298 B1**
(45) Date of publication and mention of the grant of the patent: **30.12.2020**
(21) Application number: 15893756.5
(22) Date of filing: 05.06.2015
(51) Int. Cl.: G01N 3/307

(54) **APPARATUS AND METHOD FOR TESTING IMPACT STRENGTH OF MICRO-STRUCTURE ON LINE**
VORRICHTUNG UND VERFAHREN ZUR PRÜFUNG DER SCHLAGFESTIGKEIT EINER ANGESCHLOSSENEN MIKROSTRUKTUR
APPAREIL ET PROCÉDÉ D'ESSAI DE RÉSISTANCE AU CHOC DE MICROSTRUCTURE EN LIGNE

(43) Date of publication of application: 11.04.2018
(73) Proprietor: Peking University, Beijing 100871 (CN)
(72) Inventor: ZHANG, Li, Beijing 100871 (CN); ZHANG, Dacheng, Beijing 100871 (CN); YANG, Fang, Beijing 100871 (CN); WANG, Wei, Beijing 100871 (CN); TIAN, Dayu, Beijing 100871 (CN); LIU, Peng, Beijing 100871 (CN); LI, Ting, Beijing 100871 (CN); LUO, Kui, Beijing 100871 (CN)
(74) Representative: Patentanwälte Geyer, Fehners & Partner mbB
(86) International application number: PCT/CN2015/080872
(87) International publication number: WO 2016/192100

(56) References cited:
- CN-A- 1 936 535
- CN-A- 104 330 236
- ES-A1- 2 176 090
- GB-A- 190 825 470
- JP-A- 2005 207 873
- JP-B2- 5 621 478

## Description

### BACKGROUND OF THE INVENTION

### Field of the Invention

The present disclosure relates to the machining field of the micro -electromechnical systems (MEMS), and particularly, relates to an apparatus and a method for in-situ testing impact strength of micro-structure.

### Description of the Related Art

The micro-electromechnical system is an important trend of development and application of the micro electronic technology. Now, various MEMS sensors are widely applied in many aspects of the home application and the military application, and devices using such sensors, such as a pressure meter, an accelerometer, a gyroscope and so on, are essential components in consumer electronics and high precision applications. Due to the physical parameters being measured, the MEMS sensors are usually used in a shock environment, so the impact strength of the structure of the sensors is a key issue for these sensors. The conventional method for evaluating impact strength of the MEMS sensors is drop test, which requires the sensor to be slivered and packaged after the whole manufacturing process, thus it is difficult to test the strength of the device immediately, thus greatly extending the whole designing process and cycle. At the same time, such conventional method for evaluating impact strength is relatively destructive, and the sensor chip will have a large area of structural failures after such conventional testing method, thus it is difficult to find out the weakest portion in the structure during the impact. Furthermore, limited by the manner of loading, the conventional method for evaluating impact strength cannot get a load with a high impact peak value (greater than 100000 g) and a large impact pulse width (s magnitude). However, such austere impact environment is very common in actual military applications. Thus, the conventional method for evaluating impact strength and apparatus thereof have obvious limitations.

ES 2176090 A1 discloses an apparatus for in-situ testing impact strengths of a structure, comprising a beam, one end of which being fixed; an impact mass block disposed at the other end of the flexible beam and configured to exert an impact on the structure.

### SUMMARY OF THE INVENTION

Therefore, the object of the present disclosure is intended to overcome at least one of the above mentioned problems or defects existed in the prior art.

The invention is defined by the independent claims.

In one aspect of the present disclosure, the present disclosure provides an apparatus for in-situ testing impact strength of micro-structure, comprising a flexible beam, one end of which being fixed; an impact mass block, disposed at the other end of the flexible beam and configured to exert an impact on a micro-structure; and a locking member, including a beam arm and a plurality of locking teeth, wherein one end of the beam arm is fixed, and the plurality of locking teeth are distributed at intervals along the beam arm, such that the other end of the flexible beam is engaged to one of the plurality of locking teeth when the flexible beam is loaded.

In another aspect, the present disclosure also provides a method for in-situ testing impact strength of a micro-structure, comprising: (a) fixing the micro-structure at one end so that the micro-structure faces an impact mass block; (b) loading the flexible beam such that the other end of the flexible beam is engaged to one of the plurality of locking teeth closest to the other end of the flexible beam; (c) releasing the other end of the flexible beam so as to impact the micro-structure through the impact mass block provided on the other end of the flexible beam; (d) repeating steps (b) and (c), such that the other end of the flexible beam is engaged to every tooth of the plurality of locking teeth in an order from the nearest tooth to the farthest tooth and is released, until the micro-structure is damaged; and (e) recording the position of the corresponding locking tooth when the micro-structure is damaged, calculating corresponding load-deflection and obtaining corresponding impact strength.

### BRIEF DESCRIPTION OF THE DRAWINGS

Fig. 1 is a schematic view of an apparatus for in-situ testing impact strength of micro-structure according to an embodiment of the present disclosure, wherein the flexible beam is not loaded;
Fig. 2 is a schematic view of an apparatus for in-situ testing impact strength of micro-structure according to an embodiment of the present disclosure, wherein the loaded flexible beam is being released, and wherein one end of the flexible beam is engaged to one of the plurality of locking teeth when the flexible beam is loaded;
Fig. 3(a) is a local schematic view of electronic microscope photograph of the apparatus for in-situ testing impact strength of micro-structure according to an exemplary embodiment of the present disclosure;
Fig. 3(b) is an schematic view of impact speed of the apparatus for in-situ testing impact strength of micro-structure according to an exemplary embodiment of Fig. 3(a) at different loading conditions and simulated by ansys software (ansys inc. America); and
Fig. 3(c) is an schematic view of impact stress peak caused to the micro-structure by the apparatus for in-situ testing impact strength of micro-structure according to an exemplary embodiment of Fig. 3(a) at different loading conditions and simulated by ansys software (ansys inc. America).

### DETAILED DESCRIPTION OF PREFERRED EMBODIMENTS OF THE INVENTION

Embodiments of the present disclosure will be explained in detail with reference to the drawings to make the configuration, advantages and effects apparent to the skilled person in the art.

The present disclosure can also be implemented or applied by other embodiments, and every detail in the description can be modified and changed on basis of different views and applications without departing from the concept and scope of the present disclosure.

According to a general concept of the present disclosure, an apparatus and a method for in-situ testing impact strength of micro-structure is designed. Specifically, while functional device with such micro-structure is manufactured, the functional device and the apparatus for in-situ testing impact strength of the micro-structure according to the present disclosure are manufactured on a silicon wafer with the functional device at the same time by the standard silicon on glass (SOG) bonding bulk silicon process (i.e. adding a testing area with the apparatus for in-situ testing impact strength of micro-structure according to the present disclosure onto the silicon wafer), meanwhile, a test simple of the micro-structure used in a later impact strength testing is manufactured at the apparatus under the same manufacturing conditions. After the functional device, the apparatus, and the test simple of the micro-structure are manufactured, an impact is applied on the test simple of the micro-structure by the apparatus, thus the impact strength test is performed and parameters of mechanical properties of the functional device can be achieved on line.

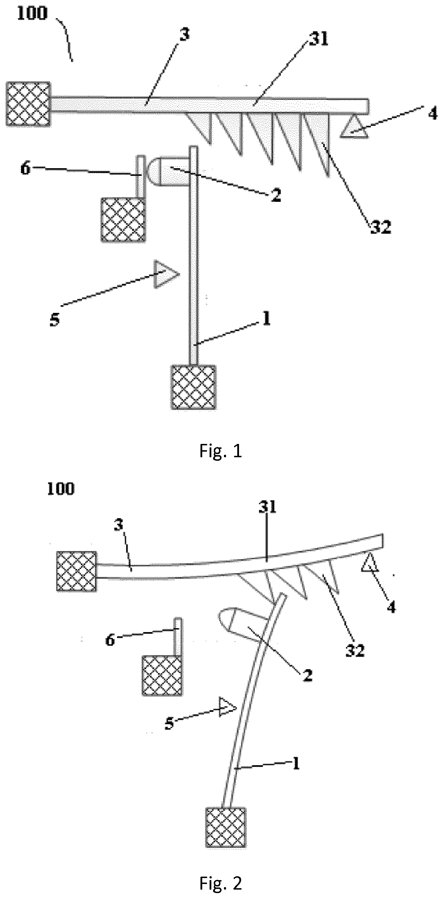

Referring to Figs. 1 and 2, the apparatus 100 for in-situ testing impact strength of micro-structure according to an embodiment of the present disclosure comprises: a flexible beam 1, one end of which being fixed; an impact mass block 2, disposed at the other end of the flexible beam 1 and configured to exert an impact on a micro-structure; and a locking member 3, including a beam arm 31 and a plurality of locking teeth 32, wherein the beam arm 31 is perpendicular to the flexible beam 1, one end of the beam arm 31 being fixed, and the plurality of locking teeth 32 being distributed at intervals along the beam arm 31, such that the other end of the flexible beam 1 is engaged to one of the plurality of locking teeth 32 when the flexible beam 1 is loaded.

In the apparatus for in-situ testing impact strength of micro-structure according to embodiments of the present disclosure, a width *w* and a length *l* of the flexible beam 1 determines the maximum impact energy created by the apparatus on the follow equation (1): $PE = \frac{2 {δ}_{max}^{2} lI}{3 {w}_{max}^{2} E}$ (1) where δₘₐₓ is a static tensile fracture strength of silicon, l is a length of beam, w is a width of beam, E is a Young modulus of silicon, I is an inertia moment of beam. The size and shape of the impact mass block 2 determine a scale of impact energy of the apparatus transmitted to the micro-structure, and the distribution of the locking teeth 32 along the beam arm determines the minimum resolution of the impact strength testing of the whole apparatus.

At the time of testing, the micro-structure to be tested is provided at one end of the flexible beam 1 provided with the impact mass block 2, as shown in Fig.1. When the flexible beam is loaded, the end of the flexible beam provided with the impact mass block 2 is engaged to one of the plurality of locking teeth 32 by pushing the flexible beam 1 and /or beam arm 31. Subsequently, a free end of the beam arm 31 is continuously pushed until the end of the flexible beam 1 provided with the impact mass block 2 is released from the engaged locking tooth, and instant impact is exerted on the micro-structure 6.

Compared with conventional testing method in which the whole functional device is impacted, such as sensors, the apparatus for in-situ testing impact strength of micro-structure of the present disclosure may test impact strength of the micro-structure more conveniently and accurately, which obviously shortens testing time, and is more helpful to feedback in design of the functional device such as sensors. Furthermore, since micro-structures may be tested, a complex structure may be divided into various micro-structures which may be tested one by one, thus the weakest area of the complex structure may easily be found.

In an embodiment, the apparatus 100 for in-situ testing impact strength of micro-structure of the present disclosure, the micro-structure 6 to be tested and a functional device (not shown in the drawings. such as sensor, etc.) are manufactured by the standard silicon on glass (SOG) bonding bulk silicon process, wherein the micro-structure 6 to be tested is a replicated sample of a micro-structure of the functional device, to perform the impact strength testing. During manufacturing process, patterns of the micro-structure 6, the apparatus 100 and the functional device are formed in the same photolithography process, and the movable silicon structures of the micro-structure, the apparatus, and the functional device are released in the same etching process. As such, it's ensured that the micro-structure 6 to be tested and the actual working functional device such as a sensor, have consistent impact strength, and interference caused by process errors is eliminated.

In an embodiment, the apparatus 100 for in-situ testing impact strength of micro-structure of the present disclosure, the micro-structure 6 to be tested and a functional device (not shown in the drawings. such as a sensor, etc.) are manufactured by the standard silicon on glass (SOG) bonding bulk silicon process, such that the apparatus 100, the micro-structure 6 to be tested and the functional device are formed in the same micro unit, facilitating individual testing of every functional device. Through such configuration, at one hand, it is possible to perform an impact strength testing on each functional device; on the other hand, on the other hand, since a functional device such as a sensor is separated from a test area, the impact strength of the micro-structure could be tested on line, without damaging the actual working functional device, thus being superior to a traditional impact manner by which the entire functional device is damaged.

In an embodiment, the apparatus 100 for in-situ testing impact strength of micro-structure of the present disclosure, the micro-structure 6 to be tested and the functional device (not shown in drawings. such as a sensor, etc.) are manufactured by the standard silicon on glass (SOG) bonding bulk silicon process, such that the micro-structure 6 is anchored on the silicon wafer (not shown) on which the functional device are provided, and is faced to the impact mass block 2, and, one end of the flexible beam 1 and one end of the beam arm 31 are anchored on the silicon wafer.

In an embodiment, a plurality of locking teeth 32 are sequentially distributed at intervals along the beam arm 31 from the free end of the beam arm 31 and lengths of the teeth are reduced by an equal amount. However, the present disclosure is not limit thereto. The skilled person in the art may set the interval and tooth length of every locking teeth and number of the locking teeth according to actual testing resolution requirement. For example, in a preferred embodiment, locking teeth 32 are distributed at equal intervals and a line connecting each tooth tip forms a generally circular arc profile, as shown in FIG. 1.

In an embodiment, size of the impact mass block 2 is set to be substantially consistent with that of the micro-structure 6. The size and shape of the impact mass block 2 may be changed with the size and shape of the micro-structure 6, thus, an impact load with high acceleration and high pulse width can be achieved. For example, in a preferred embodiment, one end of the impact mass block 2 is arc-shaped, as shown in Figs. 1 and 2. However, the present disclosure is not limited thereto. The skilled person in the art can select the shape and size of the impact mass block 2 based on actual requirements, also can adjust the size of the impact mass block and the flexible beam simultaneously to obtain the impact load required.

In an embodiment, the apparatus 100 for in-situ testing impact strength of micro-structure of a the present disclosure includes a first probe 4 for pushing the free end of the beam arm 31 so as to load and/or release the free end of the flexible beam 1 engaged to one of the plurality of locking teeth 32. In an embodiment, the apparatus 100 for testing impact strength of micro-structure of the present disclosure also includes a second probe 5 for pushing the free end of the flexible beam 1 so as to engage to one of the plurality of locking teeth 32. It should be noted that the present disclosure is not limited thereto, the skilled person in the art can select any proper structure based on actual requirements as long as the flexible beam 1 and the beam arm 32 are pushed to load and/or release the flexible beam.

In addition, the present disclosure also provides a method for in-situ testing impact strength of the micro-structure by the apparatus 100, comprising the following steps: (a) fixing a micro-structure 6 so that the micro-structure faces an impact mass block; (b) loading the flexible beam 1 such that the other end (that is, the free end) of the flexible beam 1 is engaged to one of the plurality of locking teeth 32 closest to the other end of the flexible beam 1; (c) releasing the other end of the flexible beam 1 so as to impact the micro-structure 6 through the impact mass block 2 provided at the other end of the flexible beam 1; (d) repeating steps (b) and (c), such that the other end of the flexible beam 1 is engaged to every tooth of the plurality of locking teeth 32 in the order from the nearest tooth to the farthest tooth and is released, until the micro-structure 6 is damaged; and (e) recording the position of the corresponding locking tooth when the micro-structure is damaged, and calculating corresponding load-deflection and obtaining corresponding impact strength.

Compared with conventional testing method of impacting the whole functional device, such as a sensor, the apparatus for in-situ testing impact strength of micro-structure of the present disclosure may test impact strength of the micro-structure more conveniently and accurately, which obviously shortens testing time, and is more helpful to feedback in design of the functional device such as sensors. Furthermore, since micro-structures may be tested, a complex structure may be divided into various micro-structures which may be tested one by one, thus the weakest area of the complex structure may easily be found.

In an embodiment, the step (a) comprises: by the standard silicon on glass (SOG) bonding bulk silicon process, patterns of the micro-structure 6, the apparatus 100 and the functional device are formed in the same photolithography process, and the movable silicon structures of the micro-structure, the apparatus, and the functional device are released in the same etching process, such that micro-structure is anchored on the silicon wafer on which the functional device are provided and is faced to the impact mass block, and one end of the flexible beam and one end of the beam arm are anchored on the silicon wafer.

In an embodiment, the step (c) comprises: pushing the free end of the beam arm 31 by a first probe 4 so as to load and/or release the other end of the flexible beam 1. In another embodiment, the step (b) comprises: pushing the other end (i.e. the free end) of the flexible beam 1 by a second probe 5 to load and/or release the other end of the flexible beam 1.

In an embodiment, in step (e), building a mechanical model of the apparatus by LS-DYNA simulator of ansys software (ANSYS inc. America) which is a commercially available large general software of finite element analysis, inputting the corresponding load-deflection into the mechanical model of the apparatus, obtaining acceleration value at the time of instant impact through simulation, and thus obtaining impact strength at the time of instant impact between the impact mass block and the micro-structure.

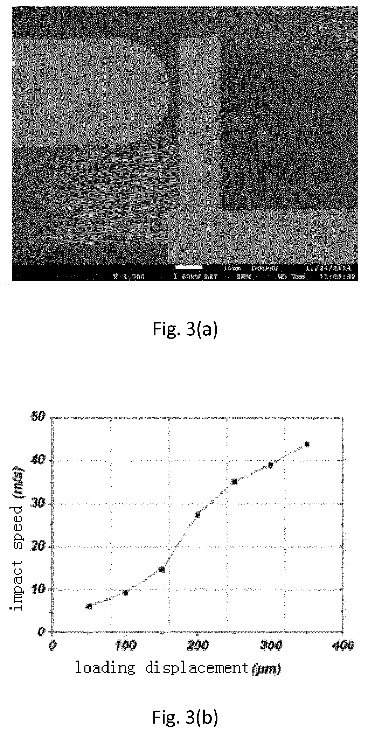

Next, an embodiment of the apparatus and method for in-situ testing impact strength of micro-structure of the present disclosure are described in detail with reference to Figs. 3(a)-3(c).

Firstly, a size of the apparatus for in-situ testing impact strength of micro-structure of the present disclosure is determined by the micro-structure to be tested. In the present embodiment, the micro-structure to be test is formed as a single tooth structure with a width of 20 micrometers and a length of 40 micrometers. The size of the impact mass block 2 is similar with that of the micro-structure to be tested , that is, the impact mass block 2 is formed as a cube with an arc shape at a single side with a length of 40 micrometers and a width of 30 micrometers, as shown in the local schematic view of electronic microscope photograph of Fig. 3(a). A size of the flexible beam 1 is required to be designed to ensure that the speed of the impact mass block is up to 10m/s at a moment before impacting the micro-structure to be tested. Thus, on the basis of energy storage equation of the flexible beam, relationship between the angular velocity and linear velocity, and the principle of conservation of energy, in the present embodiment, the size of the flexible beam is 700 micrometers long and 10 micrometers wide. Under such design, the instantaneous speed of the impact mass block at the moment before impact may be up to 20m/s. The design of locking teeth is determined on the basis of impact speed resolution requirement, the higher the resolution, the more intensive the locking teeth are arranged, that is, the number of the locking teeth is larger. In this example, the interval between the teeth is 10 micrometers. Meanwhile, the position of the locking teeth varies depending on the flexible beam. In the present embodiment, the locking position where the flexible beam is loaded is on a 1/4 circular sector contour formed by a radius of the flexible beam with the center being the end of the flexible beam, thus ensuring that the flexible beam is not blocked during a loading process.

In an embodiment, the micro-structure 6, the apparatus 100 and the functional device such as sensors are manufactured by the standard silicon on glass (SOG) bonding bulk silicon process, all of which are formed in the same micro unit, patterns of which are defined in the same photolithography process, and also movable silicon structures are formed in the same etching process.

After the manufacturing process is completed, the apparatus for in-situ testing impact strength of a micro-structure according to the present embodiment is loaded and tested, for example, by probes. In this embodiment, a probe (eg, a second probe) is directly driven to load the flexible beam into the position of the corresponding locking tooth in an order from the nearest to the farthest, and then a locking operation is performed through another probe (eg, a first probe). After the whole system is stable, the flexible beam is released through the other probe, the impact result is recorded, and the test is repeated until the micro-structure to be tested is destructed by impact load. Then loading distance of the flexible beam is recorded, that is, the position of the locking tooth at this moment. In this embodiment, the destruction location is the twentieth locking tooth, that is, the load-deflection is 200 microns.

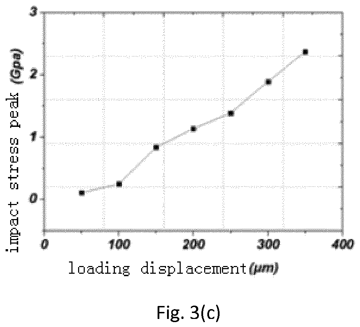

Then, the impact failure deflection obtained by the test is inputted into the mechanical model built by the Ansys software of ANSYS Inc. (America), the impact process is simulated by the LS-DYNA module of the ANSYS software, and instantaneous impact acceleration of the impact between the impact mass block and the micro-structure under test in the condition that the deflection is 200 micrometers is obtained, which is the impact load ultimate strength value of the micro-structure under test. Figs. 3(b) and 3(c) show an impact speed schematic view and a schematic view of impact stress peak caused to the micro-structure at different loading conditions. In this example, the impact strength of the micro-structure under tested is 1.25 GPa.

The embodiments of the present disclosure described above illustrate the principle and the functions of the present disclosure by way of example only, rather than to limit the present disclosure. The scope of the invention is set forth in the appended claims.

## Claims

1. An apparatus for in-situ testing impact strength of a micro-structure (6), comprising:
a flexible beam (1), one end of which being fixed;
an impact mass block (2) disposed at the other end of the flexible beam (1) and configured to exert an impact on the micro-structure (6); and
a locking member (3) comprising a beam arm (31) and a plurality of locking teeth (32), wherein the beam arm (31) is perpendicular to the flexible beam (1) and one end of the beam arm (31) is fixed, and wherein the plurality of locking teeth (32) are distributed at intervals along the beam arm (31), such that the other end of the flexible beam (1) is engaged to one of the plurality of locking teeth (32) when the flexible beam (1) is loaded.

2. The apparatus according to claim 1, wherein the plurality of locking teeth (32) are sequentially distributed at intervals along the beam arm (31) from the free end of the beam arm (31) and lengths of the teeth are reduced by an equal amount.

3. The apparatus according to any one of claims 1-2, further comprising:
a first probe (4) for pushing the other end of the beam arm (31) so as to load and/or release the other end of the flexible beam (1) engaged to one of the plurality of locking teeth (32).

4. The apparatus according to claim 3, further comprising
a second probe (5) for pushing the other end of the flexible beam (1) so that the other end of the flexible beam (1) is engaged to one of the plurality of locking teeth (32).

5. The apparatus according to any one of claims 1-2, wherein a size of the impact mass block (2) is set to be substantially similar with that of the micro-structure (6).

6. The apparatus according to claim 5, wherein one end of the impact mass block (2) is arc-shaped.

7. A method for in-situ testing impact strength of a micro-structure using the apparatus (100) according to claim 1, comprising:
(a) fixing the micro-structure (6) at one end so that the micro-structure (6) faces the impact mass block (2);
(b) loading the flexible beam (1) such that the other end of the flexible beam (1) is engaged to one of the plurality of locking teeth (32) closest to the other end of the flexible beam (1);
(c) releasing the other end of the flexible beam (1) so as to impact the micro-structure (6) through the impact mass block (2) provided on the other end of the flexible beam (1);
(d) repeating steps (b) and (c), such that the other end of the flexible beam (1) is engaged to every tooth of the plurality of locking teeth (32) in an order from the nearest tooth to the farthest tooth and is released, until the micro-structure (6) is damaged; and
(e) recording the position of the corresponding locking tooth when the micro-structure (6) is damaged, calculating corresponding load-deflection and obtaining corresponding impact strength.

8. The method according to claim 7, wherein step (a) comprises:
forming patterns of the micro-structure (6), the apparatus (100) and a functional device by a silicon on glass bonding bulk silicon process in the same photolithography process, the functional device comprising the same structure with the micro-structure (6), and wherein movable silicon structures of the micro-structure (6), the apparatus (100), and the functional device are released in the same etching process, such that the micro-structure (6) is anchored on a silicon wafer on which the functional device is provided and faces the impact mass block (2), and one end of the flexible beam (1) and one end of the beam arm (31) are anchored on the silicon wafer.

9. The method according to claim 7 or 8, wherein step (c) comprises:
pushing the free end of the beam arm (31) by a first probe (4) so as to load and/or release the other end of the flexible beam (1).

10. The method according to claim 9, wherein step (b) comprises:
pushing the other end of the flexible beam (1) by a second probe (5) to load and/or release the other end of the flexible beam (1).

11. The method according to claim 7 or 8, wherein step (e) comprises:
inputting corresponding load-deflection into a mechanical model of the apparatus (100), and obtaining acceleration value at a time of instant impact between the impact mass block (2) and the micro-structure (6).

## Patentansprüche

1. Vorrichtung zur Vor-Ort-Prüfung der Schlagfestigkeit einer Mikrostruktur (6), Folgendes umfassend:
einen flexiblen Balken (1), der an einem Ende fixiert ist;
einen Schlagmasseblock (2), der am anderen Ende des flexiblen Balkens (1) angeordnet und dazu ausgelegt ist, einen Schlag auf die Mikrostruktur (6) auszuüben; und
ein Verriegelungselement (3), das einen Balkenarm (31) und mehrere Verriegelungszähne (32) umfasst, wobei der Balkenarm (31) senkrecht zum flexiblen Balken (1) ist und ein Ende des Balkenarms (31) fixiert ist und wobei die mehreren Verriegelungszähne (32) in Intervallen entlang des Balkenarms (31) verteilt sind, sodass das andere Ende des flexiblen Balkens (1) in einen der mehreren Verriegelungszähne (32) eingreift, wenn der flexible Arm (1) gespannt ist.

2. Vorrichtung nach Anspruch 1, wobei die mehreren Verriegelungszähne (32) vom freien Ende des Balkenarms (31) nacheinander in Intervallen entlang des Balkenarms (31) verteilt sind und die Längen der Zähne um eine gleiche Größe verringert sind.

3. Verfahren nach einem der Ansprüche 1-2, ferner Folgendes umfassend:
eine erste Sonde (4), um gegen das andere Ende des Balkenarms (31) zu drücken, um das andere Ende des flexiblen Balkens (1), das in einen der mehreren Verriegelungszähne (32) eingreift, zu spannen bzw. zu lösen.

4. Vorrichtung nach Anspruch 3, ferner Folgendes umfassend:
eine zweite Sonde (5), um gegen das andere Ende des Balkenarms (1) zu drücken, sodass das andere Ende des flexiblen Balkens (1) in einen der mehreren Verriegelungszähne (32) eingreift.

5. Vorrichtung nach einem der Ansprüche 1-2, wobei die Größe des Schlagmasseblocks (2) derart eingestellt ist, dass sie im Wesentlichen jener der Mikrostruktur (6) gleicht.

6. Vorrichtung nach Anspruch 5, wobei ein Ende des Schlagmasseblocks (2) bogenförmig ist.

7. Verfahren zur Vor-Ort-Prüfung der Schlagfestigkeit einer Mikrostruktur unter Verwendung der Vorrichtung (100) nach Anspruch 1, Folgendes umfassend:
(a) Fixieren der Mikrostruktur (6) an einem Ende, sodass die Mikrostruktur (6) dem Schlagmasseblock (2) zugewandt ist;
(b) Spannen des flexiblen Balkens (1), sodass das andere Ende des flexiblen Balkens (1) in einen der mehreren Verriegelungszähne (32) eingreift, der dem anderen Ende des flexiblen Balkens (1) am nächsten ist;
(c) Lösen des anderen Endes des flexiblen Balkens (1), um mit dem Schlagmasseblock (2), der am anderen Ende des flexiblen Balkens (1) vorgesehen ist, auf die Mikrostruktur (6) zu schlagen;
(d) Wiederholen der Schritte (b) und (c), sodass das andere Ende des flexiblen Balkens (1) in der Reihenfolge vom nächsten Zahn zum am weitesten entfernten Zahn in jeden Zahn der mehreren Verriegelungszähne (32) eingreift und gelöst wird, bis die Mikrostruktur (6) beschädigt ist; und
(e) Aufzeichnen der Position des zugehörigen Verriegelungszahns, wenn die Mikrostruktur (6) beschädigt wird, Berechnen der zugehörigen Lastdurchbiegung und Erhalten der zugehörigen Schlagfestigkeit.

8. Verfahren nach Anspruch 7, wobei Schritt (a) Folgendes umfasst:
Ausbilden von Mustern der Mikrostruktur (6), der Vorrichtung (100) und einer Funktionseinrichtung durch einen Silizium-auf-Glas-Massivsilizium-Verklebungsvorgang in demselben Fotolithografievorgang, wobei die Funktionseinrichtung dieselbe Struktur mit der Mikrostruktur (6) umfasst und wobei bewegliche Siliziumstrukturen der Mikrostruktur (6), der Vorrichtung (100) und der Funktionseinrichtung in demselben Ätzvorgang gelöst werden, sodass die Mikrostruktur (6) auf einem Silizium-Wafer verankert ist, auf dem die Funktionseinrichtung vorgesehen ist und dem Schlagmasseblock (2) zugewandt ist, und wobei ein Ende des flexiblen Balkens (1) und ein Ende des Balkenarms (31) auf dem Silizium-Wafer verankert sind.

9. Verfahren nach Anspruch 7 oder 8, wobei Schritt (c) Folgendes umfasst: Schieben des freien Endes des Balkenarms (31) mittels einer ersten Sonde (4), um das andere Ende des flexiblen Balkens (1) zu spannen bzw. zu lösen.

10. Verfahren nach Anspruch 9, wobei Schritt (b) Folgendes umfasst: Schieben des anderen Endes des flexiblen Balkens (1) mittels einer zweiten Sonde (5), um das andere Ende des flexiblen Balkens (1) zu spannen bzw. zu lösen.

11. Verfahren nach Anspruch 7 oder 8, wobei Schritt (e) Folgendes umfasst:
Eingeben einer zugehörigen Lastdurchbiegung in ein mechanisches Modell der Vorrichtung (100) und Erhalten eines Beschleunigungswerts zu einem Zeitpunkt des direkten Aufpralls zwischen dem Schlagmasseblock (2) und der Mikrostruktur (6).

## Revendications

1. Appareil d'essai in situ de résistance au choc d'une microstructure (6), comprenant :
une poutre flexible (1), dont une extrémité est fixe ;
un bloc de masse de choc (2) disposé à l'autre extrémité de la poutre flexible (1) et conçu pour exercer un choc sur la microstructure (6) ; et
un élément de verrouillage (3) comprenant un bras de poutre (31) et une pluralité de dents de verrouillage (32), le bras de poutre (31) étant perpendiculaire à la poutre flexible (1) et une extrémité du bras de poutre (31) étant fixe, et la pluralité de dents de verrouillage (32) étant répartie à des intervalles le long du bras de poutre (31), de sorte que l'autre extrémité de la poutre flexible (1) soit en prise avec l'une de la pluralité de dents de verrouillage (32) lorsque la poutre flexible (1) est chargée.

2. Appareil selon la revendication 1, la pluralité de dents de verrouillage (32) étant réparties séquentiellement à des intervalles le long du bras de poutre (31) à partir de l'extrémité libre du bras de poutre (31) et les longueurs des dents étant réduites d'une quantité égale.

3. Appareil selon l'une quelconque des revendications 1 à 2, comprenant en outre :
une première sonde (4) pour pousser l'autre extrémité du bras de poutre (31) de sorte à charger et/ou libérer l'autre extrémité de la poutre flexible (1) en prise avec l'une de la pluralité de dents de verrouillage (32).

4. Appareil selon la revendication 3, comprenant en outre
une seconde sonde (5) pour pousser l'autre extrémité de la poutre flexible (1) de sorte que l'autre extrémité de la poutre flexible (1) soit en prise avec l'une de la pluralité de dents de verrouillage (32).

5. Appareil selon l'une quelconque des revendications 1 à 2, la taille du bloc de masse de choc (2) étant définie de sorte à être sensiblement similaire à celle de la microstructure (6).

6. Appareil selon la revendication 5, une extrémité du bloc de masse de choc (2) étant en forme d'arc.

7. Procédé d'essai in situ de résistance au choc d'une microstructure à l'aide de l'appareil (100) selon la revendication 1, comprenant les étapes consistant à :
(a) fixer la microstructure (6) à une extrémité de sorte que la microstructure (6) soit en face du bloc de masse de choc (2) ;
(b) charger la poutre flexible (1) de sorte que l'autre extrémité de la poutre flexible (1) soit en prise avec l'une de la pluralité des dents de verrouillage (32) les plus proches de l'autre extrémité de la poutre flexible (1) ;
(c) libérer l'autre extrémité de la poutre flexible (1) de sorte à heurter la microstructure (6) par l'intermédiaire du bloc de masse de choc (2) disposé sur l'autre extrémité de la poutre flexible (1) ;
(d) répéter les étapes (b) et (c), de sorte que l'autre extrémité de la poutre flexible (1) soit en prise avec chaque dent de la pluralité de dents de verrouillage (32) dans un ordre allant de la dent la plus proche à la dent la plus éloignée et soit libérée, jusqu'à ce que la microstructure (6) soit endommagée ; et
(e) enregistrer la position de la dent de verrouillage correspondante lorsque la microstructure (6) est endommagée, calculer la déviation de charge correspondante et obtenir la résistance au choc correspondante.

8. Procédé selon la revendication 7, l'étape (a) comprenant l'étape consistant à :
former des motifs de la microstructure (6), de l'appareil (100) et d'un dispositif fonctionnel par un procédé de silicium massif à liaison silicium sur verre dans le même procédé de photolithographie, le dispositif fonctionnel comprenant la même structure avec la microstructure (6), et des structures de silicium mobiles de la microstructure (6), l'appareil (100) et le dispositif fonctionnel étant libérés au cours du même processus de gravure, de sorte que la microstructure (6) soit ancrée sur une plaquette de silicium sur laquelle le dispositif fonctionnel est disposé et fasse face au bloc de masse de choc (2), et une extrémité de la poutre flexible (1) et une extrémité du bras de poutre (31) soient ancrées sur la plaquette de silicium.

9. Procédé selon la revendication 7 ou 8, l'étape (c) comprenant l'étape consistant à :
pousser l'extrémité libre du bras de poutre (31) par une première sonde (4) de sorte à charger et/ou libérer l'autre extrémité de la poutre flexible (1).

10. Procédé selon la revendication 9, l'étape (b) comprenant l'étape consistant à :
pousser l'autre extrémité de la poutre flexible (1) par une seconde sonde (5) pour charger et/ou libérer l'autre extrémité de la poutre flexible (1).

11. Procédé selon la revendication 7 ou 8, l'étape (e) comprenant les étapes consistant à :
introduire une déflexion de charge correspondante dans un modèle mécanique de l'appareil (100), et obtenir la valeur d'accélération au moment du choc instantané entre le bloc de masse de choc (2) et la microstructure (6).
